# NEUE EUROPÄISCHE PATENTSCHRIFT

(11) **EP 0 464 618 B2**
(45) Veröffentlichungstag und Bekanntmachung des Hinweises auf die Entscheidung über den Einspruch: **28.06.2000**
(45) Hinweis auf die Patenterteilung: 12.02.1997
(21) Anmeldenummer: 91110527.8
(22) Anmeldetag: 26.06.1991
(51) Int. Cl.: B32B 5/26, E04C 2/24

(54) **Mehrschicht-Leichtbauplatte**
Multilayer light-weight construction panel
Panneau de construction léger multicouche

(30) Priorität: 29.06.1990 AT 139090; 12.12.1990 DE 9016820 U
(43) Veröffentlichungstag der Anmeldung: 08.01.1992
(73) Patentinhaber: ISOLITH Leichtbauplattenwerk M. Hattinger Gesellschaft mbH, 5204 Strasswalchen (AT)
(72) Erfinder: Sollerer, Gregor, Dipl.-Ing., A-6332 Schwoich (AT)
(74) Vertreter: Torggler, Paul, Dr.

(56) Entgegenhaltungen:
- BE-A- 792 718
- DE-A- 3 223 246
- FR-A- 2 411 930
- FR-A- 2 592 416
- GB-A- 1 421 875
- NL-A- 7 404 383
- US-A- 3 712 846

## Beschreibung

Die Erfindung bezieht sich auf eine Mehrschicht-Leichtbauplatte mit einer Faserstoff-Schicht von luftdurchlässiger Struktur und einer ein- oder beidseitigen Deckschicht aus luftdurchlässiger gebundener Holzwolle.

Derartige Leichtbauplatten sind bekannt, z.B. als Holzwolle-Mehrschicht-Dämmplatten gemäß ÖNORM B 6021 bzw. DIN 1101. Sie werden häufig als Bauelemente zur Wärme-und Schalldämmung verwendet. Die Verbindung von Deckschicht und Faserstoff-Schicht erfolgt bei den bekannten Leichtbauplatten dieser Gattung durch einen vollflächigen Klebstoffauftrag, z. B. in Form einer Zementschlämme auf die Verbindungsflächen von Deckschicht und Faserstoff-Schicht. Der Schallabsorptionsgrad solcher Platten ist jedoch nicht ausreichend, um sie im Rahmen von Lärmschutzmaßnahmen, bei denen es vor allem auf Schallabsorption ankommt, einzusetzen.

Aufgabe der Erfindung ist es, den Schallabsorptionsgrad von Leichtbauplatten der eingangs genannten Gattung zu verbessern, um sie vor allem für Lärmschutzbauwerke einsetzen zu können.

Erfindungsgemäß wird dies erreicht durch die Merkmale des Anspruchs 1 oder 7.

Durch diese Maßnahme können die Schallwellen als Luftschall in die luftdurchlässige (poröse) Faserstoff-Schicht eindringen, in der sie durch "Bremsen" der schwingenden Luftteilchen hochgradig absorbiert werden, wobei (in geringerem Ausmaß) auch die vorgelagerte ebenfalls luftdurchlässige (poröse) Deckschicht und gegebenenfalls die hintere Deckschicht zur Luftschall-Absorption beiträgt.

Die Lärmschutzwirkung beruht also beim Gegenstand der Erfindung auf dem Effekt der Absorption des Luftschalles (im Gegensatz zum Körperschall) und der weitgehenden Verhinderung von gerichteten Schallreflexionen, die an jeder geschlossenen Fläche auftreten, so auch an einer vollflächigen Klebstoffschicht.

Aus diesem Grunde ist gemäß der Erfindung vorgesehen, daß die Verbindung zwischen der Faserstoff-Schicht und mindestens einer der Deckschichten durch partielle Verklebung erfolgt. Unter partieller Verklebung wird verstanden, daß auf der Verbindungsfläche der Faserstoff-Schicht und/oder Deckschicht kein über die ganze Verbindungsfläche durchgehender Klebstoffauftrag vorgenommen wird, sondern die Verklebung nur auf Teilbereichen der Verbindungsfläche erfolgt.

Es hat sich überraschenderweise herausgestellt, daß trotz der erfindungsgemäß bloß partiellen Verklebung eine hinreichende Verbundfestigkeit zwischen Deckschicht und Faserstoff-Schicht erhalten bleibt, wobei zur Verbundfestigkeit auch das mineralische Bindemittel in der Deckschicht beiträgt, welches zum Zeitpunkt der Verbindung von Deckschicht und Faserstoff-Schicht vorzugsweise noch nicht ausgehärtet sein soll. Durch das Bindemittel der Deckschicht wird aber infolge der "Rauhigkeit" der Verbindungsflächen von Deckschicht und Faserstoff-Schicht keine vollständige Verklebung verursacht, vielmehr bloß eine partielle bzw. punktuelle Verklebung, sodaß der erfindungsgemäße Effekt der Schwingung von Luftteilchen durch die Trennfläche von Deckschicht und Faserstoff-Schicht hindurch erhalten bleibt. Insbesondere auch durch den Beitrag, den das Bindemittel der Deckschicht zur partiellen Verbindung mit der Faserstoff-Schicht leistet, unterscheidet sich die Erfindung von bekannten partiellen Verklebungen zwischen einer Deckschicht und einer Faserstoff-Schicht (FR-A 2 592 416, NL-A 7404383, GB-A 1 421 875, US-A 3 712 846).

Günstige Verhältnisse von Absorptionsgrad und Verbundfestigkeit erzielt man, wenn der Klebstoffauftrag auf etwa 30 % bis 70 %, vorzugsweise auf etwa 50 % der Verbindungsfläche von Faserstoff-Schicht und Deckschicht erfolgt.

Für die Verbundfestigkeit kommt es vor allem auf eine gute Verbindung an den Plattenrändern an. Es ist daher vorteilhaft, wenn der Klebstoffauftrag in Form von Streifen erfolgt, die sich vorzugsweise über eine Plattendimension durchgehend erstrecken bzw. wenn die partielle Verklebung zumindest an zwei zueinander parallelen Rändern, vorzugsweise den Längsrändern der Verbindungsfläche zwischen Faserstoff-Schicht und der Deckschicht erfolgt.Ferner ist es für die schallabsorbierende Wirkung von Vorteil, wenn der Klebstoffauftrag auf den betreffenden Teilbereichen der Verbindungsfläche nicht als zusammenhängender Klebfilm, sondern in Punktstruktur erfolgt, was z.B. durch Aufsprühen des Klebstoffs erreicht werden kann. Als Klebstoff kann z.B. Wasserglas oder Dispersionskleber verwendet werden.

Die Deckschicht ist eine Holzwolle-Leichtbauplatte, bei der die Holzwolle mineralisch gebunden ist, z.B. gemäß ÖNORM B 6021 bzw. DIN 1101, jedoch vorteilhafterweise mit relativ geringem Verdichtungsgrad. Statt dessen kann auch eine Deckschicht verwendet werden, bei der die Holzwolle durch ein organisches Bindemittel, z.B. Kunstharz, oder durch ein mineralisches Bindemittel mit einem Klebstoffzusatz gebunden ist. Die Faserstoff-Schicht kann vorzugsweise aus Mineralfasern, z.B. Steinwolle, jedoch auch aus Kunststoffasern oder Naturfasern bestehen. Die Fasern der Faserstoffschicht werden durch einen bloß relativ geringen Bindemittelanteil gebunden, damit die Faserstoff-Schicht eine offenporige, luftdurchlässige Struktur aufweist. Die Faserstoff-Schicht kann gegebenenfalls auch in sich geschichtet bzw. mit anderem offenporigen Material kombiniert sein.

Die Erfindung wird nachstehend anhand der Zeichnung durch Ausführungsbeispiele näher erläutert.

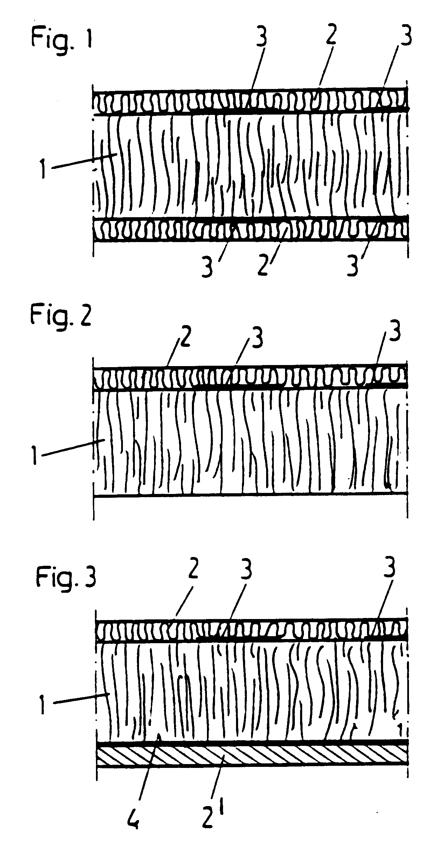

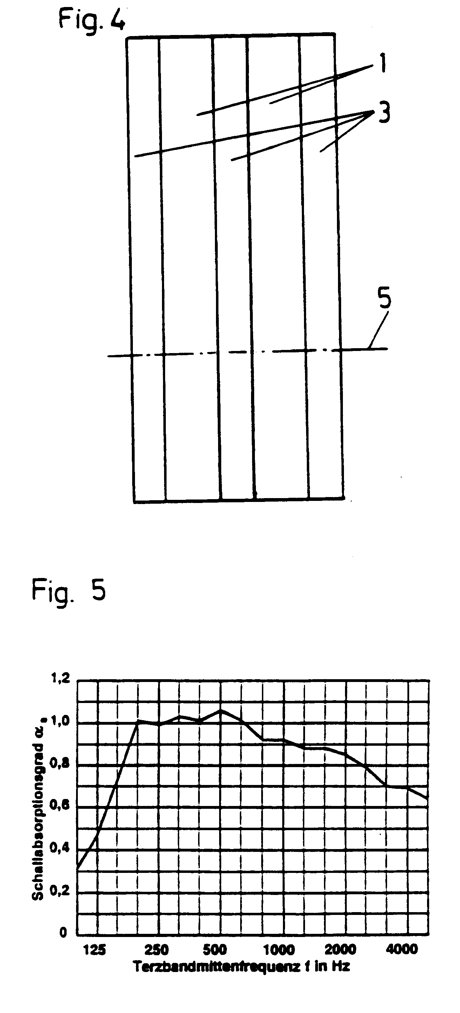

In Fig. 1 - 3 sind verschiedene Beispiele von Querschnitten einer erfindungsgemäßen Mehrschicht-Leichtbauplatte dargestellt. Fig. 4 zeigt eine Draufsicht auf die Verbindungsfläche der Faserstoff-Schicht. Fig. 5 zeigt ein Schallabsorptionsdiagramm einer erfindungsgemäßen Mehrschicht-Leichtbauplatte.

Die Mehrschicht-Leichtbauplatte gemäß Fig. 1 besteht aus einer Faserstoffschicht 1, z.B. aus Steinwolle, die beidseitig eine Deckschicht 2 aus gebundener, z.B. zementgebundener Holzwolle aufweist. Die Faserorientierung in der Faserstoff-Schicht 1 kann senkrecht zur Plattenoberfläche sein. Es sind jedoch auch andere Faserorientierungen möglich. Die Verbindung zwischen der Faserstoff-Schicht 1 und den Deckschichten 2 erfolgt erfindungsgemäß durch partielle Verklebung, wobei der Klebstoffauftrag 3 beispielsweise in Streifenform erfolgt. Eine Mehrschicht-Leichtbauplatte gemäß Fig. 1 ist zweiseitig schallabsorbierend und auch beidseitig mit einer widerstandsfähigen Oberfläche versehen, sodaß eine solche Platte sowohl zur Verkleidung einer Wand oder Decke als auch selbst als Trennwand geeignet ist.

Die Mehrschicht-Leichtbauplatte nach Fig. 2 unterscheidet sich gegenüber jener nach Fig. 1 dadurch, daß auf der Faserstoff-Schicht 1 nur einseitig eine Deckschicht 2 aus gebundener Holzwolle aufgebracht ist, wobei jedoch auch in diesem Fall eine partielle Verklebung zwischen Faserstoff-Schicht 1 und Deckschicht 2 erfolgt. Der Klebstoffauftrag 3 kann wiederum z.B. in Streifenform aufgebracht werden. Diese Leichtbauplatte ist an sich auch zweiseitig schallabsorbierend, da sie aber nur eine widerstandsfähige Oberfläche aufweist, vor allem zur Verkleidung von Decken und Wänden geeignet, weniger als frei stehendes Bauelement.

Die Mehrschicht-Leichtbauplatte nach Fig. 3 besteht aus der Faserstoff-Schicht 1, die auf der einen Seite mit einer Deckschicht 2 aus gebundener Holzwolle, auf der anderen Seite mit einer festen geschlossenen, gegebenenfalls tragenden Deckschicht 2', z.B. aus Holz, Metall, mineralischem Baustoff, versehen ist. Es erfolgt jedoch beim Ausführungsbeispiel nach Fig. 3 nur mit einer der beiden Deckschichten 2 eine partielle Verklebung mit Hilfe von partiellem Klebstoffauftrag 3, während die andere Deckschicht 2' über einen Klebstoffauftrag 4 verbunden ist, der sich über die gesamte Verbindungsfläche erstreckt. Diese Mehrschicht-Leichtbauplatte ist im wesentlichen einseitig schallabsorbierend, da die feste geschlossene, gegebenenfalls tragende Deckschicht 2' und der durchgehende Klebstoffauftrag 4 als "Schallschirm" wirkt, was insbesondere in jenen Fällen von Vorteil sein kann, bei denen nicht nur eine Schallabsorption zur Verbesserung der Raumakustik erwünscht ist, sondern auch eine Schalldämmung gegenüber einem benachbarten Raum, wobei allerdings zu bemerken ist, daß auch Mehrschicht-Leichtbauplatten gemäß Fig. 1 und 2 schalldämmend wirken. Eine Mehrschicht-Leichtbauplatte gemäß Fig. 3 eignet sich z.B. als Raum-Trennwand, in besonderer Weise aber auch als Schallschutzwand im Verkehrsbereich.

Es wurde bereits erwähnt, daß der Klebstoffauftrag 4 vorzugsweise in Streifenform erfolgt, was auch durch Fig. 4 veranschaulicht wird. Fig. 4 zeigt eine Draufsicht auf die Verbindungsfläche der Faserstoff-Schicht 1 vor deren Verbindung mit der Deckschicht. Auf die Verbindungsfläche wird Klebstoff, beispielsweise Wasserglas, in Form von Streifen 3 aufgebracht, vorzugsweise aufgesprüht, wobei je zwei Randstreifen und ein Mittelstreifen vorgesehen sind. Ein derartiger Klebstoffauftrag in Streifenform ist vor allem deshalb von Vorteil, weil bei einer Trennung der Platte, z.B. gemäß der Trennfläche 5, in beiden getrennten Plattenteilen dieselben Klebeflächenverhältnisse erhalten bleiben. Für die Verbundfestigkeit zwischen der Faserstoff-Schicht 1 und den Deckschichten 2 ist es vor allem wichtig, daß sich der Klebstoffauftrag 3 auch entlang der Randzonen der Verbindungsfläche erstreckt, wobei insbesondere die Längsrandzonen der Verbindungsfläche wichtig sind.

Wenn es auch zweckmäßig ist, den Klebstoffauftrag in Streifenform aufzubringen, kann statt dessen auch ein anders gestalteter partieller Klebstoffauftrag erfolgen, wobei beliebige Flächenmuster möglich sind.

Bei einer Mehrschicht-Leichtbauplatte mit einem Querschnittsaufbau gemäß Fig. 1 und einem Klebstoffauftrag gemäß Fig. 4 wurden Schallabsorptionsmessungen durchgeführt. Bei der Versuchsplatte war die Faserstoff-Schicht 1 eine Steinwollplatte mit Faserorientierung senkrecht zur Plattenoberfläche und einer Dicke von ca. 5,5 cm, die beiden Deckschichten 2 bestanden aus einer zementgebundenen Holzwolle-Leichtbauplatte von je 1 cm Stärke. Der Klebstoffauftrag (in den Streifen) erstreckte sich über ca. 50 % der Verbindungsfläche. Bei dieser Mehrschicht-Leichtbauplatte konnten Schallabsorptionsgrad-Werte gemäß Fig. 5 ermittelt werden. Mit solchen Platten könnte eine Schallabsorption mit einem Kennwert Δ L_{A,α,Str} (nach DIN 52212) bis zu 16 dB erreicht werden. Jedenfalls sind dank der erfindungsgemäßen Maßnahme ohne Schwierigkeiten Kennwerte von über 8 dB erreichbar, womit die Platte als "hochabsorbierend" einzustufen ist.

Da das Maximum der Schallabsorption bei etwa 500 Hz liegt, also im relativ niederen Frequenzbereich, ist die erfindungsgemäße Mehrschicht-Leichtbauplatte besonders geeignet für Lärmschutzwände im Straßenverkehr, beispielsweise zur Lärmschutzverkleidung von Verkehrsräumen (Tunnels, Straßengalerien).

Anstelle bzw. im Verein mit einer partiellen Verklebung kommt zur Erzielung einer luftdurchlässigen Verbindung zwischen Deckschicht 2 und Faserstoff-Schicht auch eine mechanische Verklammerung der Späne der Deckschicht 2 mit den Fasern der Faserstoff-Schicht 1 in Frage (etwa analog einem "Klettenverschluß").

Eine weitere Möglichkeit, die erfindungsgemäße luftdurchlässige Verbindung zwischen Deckschicht und Faserstoff-Schicht zu realisieren, besteht darin, die Schichten mit Hilfe einer Nietverbidnung, insbesondere unter Verwendung von Kunststoff-Rohrnieten, oder mit Hilfe eines die Plattenschichten peripher zusammenhaltenden Rahmens zu verbinden.

Wesentlich - und in allen Ausführungsbeispielen gemeinsam - ist es, daß sowohl die (bzw. eine) Deckschicht als auch die Faserstoff-Schicht luftdurchlässig ist (d. h. Luft in das Material der betreffenden Schicht eindringen kann), und daß auch die Verbindung zwischen Deckschicht und Faserstoff-Schicht luftdurchlässig bleibt, sodaß die luftschallabsorbierende Eigenschaft der Faserstoff-Schicht, gegebenenfalls zusätzlich zur luftschallabsorbierenden Eigenschaft der Deckschicht, zur Geltung kommt.

## Patentansprüche

1. Mehrschicht-Leichtbauplatte mit einer Faserstoff-Schicht (1) von luftdurchlässiger Struktur und einer ein- oder beidseitigen Deckschicht (2) aus luftdurchlässiger, gebundener Holzwolle, gekennzeichnet durch eine mindestens partiell luftdurchlässige Verbindung zwischen Deckschicht (2) bzw. mindestens einer der Deckschichten (2) und der Faserstoff-Schicht (1), wobei diese Verbindung durch partielle Verklebung erfolgt, wobei die partielle Verklebung einerseits durch das, vorzugsweise mineralische, Bindemittel der Deckschicht (2) erfolgt, und andererseits durch einen Klebstoffauftrag (3) auf Teilbereiche der Verbindungsfläche von Deckschicht (2) und/oder Faserstoffschicht (1).

2. Mehrschicht-Leichtbauplatte nach Anspruch 1, dadurch gekennzeichnet, daß der Klebstoffauftrag (3) auf etwa 30 % bis 70 %, vorzugsweise auf etwa 50 % der Verbindungsfläche von Faserstoff-Schicht (1) und Deckschicht (2) erfolgt.

3. Mehrschicht-Leichtbauplatte nach Anspruch 1 oder 2, dadurch gekennzeichnet, daß der Klebstoffauftrag (3) in Form von Streifen erfolgt, die sich vorzugsweise über eine Plattendimension durchgehend erstrecken.

4. Mehrschicht-Leichtbauplatte nach einem der Ansprüche 1 bis 3, dadurch gekennzeichnet, daß die partielle Verklebung zumindest an zwei zueinander parallelen Rändern, vorzugsweise den Längsrändern der Verbindungsfläche zwischen Faserstoff-Schicht (1) und der Deckschicht (2) erfolgt.

5. Mehrschicht-Leichtbauplatte nach einem der Ansprüche 1 bis 4, gekennzeichnet durch die Verwendung von Wasserglas oder Dispersionskleber als Klebstoff.

6. Mehrschicht-Leichtbauplatte nach einem der Ansprüche 1 bis 5, dadurch gekennzeichnet, daß die Faserstoff-Schicht (1) auf einer Seite über partielle Verklebung (3) eine Deckschicht (2) aus gebundener Holzwolle und auf der anderen Seite, vorzugsweise über eine durchgehende Klebstoffschicht (4), eine feste geschlossene, gegebenenfalls tragende Deckschicht (2') aufweist.

7. Mehrschicht-Leichtbauplatte mit einer Faserstoff-Schicht (1) von luftdurchlässiger Struktur und einer ein- oder beidseitigen Deckschicht (2) aus luftdurchlässiger gebundener Holzwolle, gekennzeichnet durch eine mindestens partiell luftdurchlässige Verbindung zwischen Deckschicht (2) bzw. mindestens einer der Deckschichten (2) und der Faserstoff-Schicht (1), wobei diese Verbindung einerseits durch partielle Verklebung durch das vorzugsweise mineralische Bindemittel der Deckschicht (2) erfolgt und anderseits durch einen die Plattenschichten umfassenden Rahmen erfolgt.

## Claims

1. A multi-layer lightweight panel comprising a fibre material layer (1) of air-permeable structure and a cover layer (2) at one or both sides and comprising air-permeable bonded wood fibre, characterised by an at least partially air-permeable bond between the cover layer (2) or at least one of the cover layers (2) and the fibre material layer (1), said bond being effected by a partial adhesive join, wherein the partial adhesive join on the one hand is effected by the preferably mineral bonding agent of the cover layer (2) and on the other hand by an application of adhesive (3) to partial zones of the connecting surface of the cover layer (2) and/or the fibre material layer (1).

2. A multi-layer lightweight panel according to claim 1 characterised in that the application of adhesive (3) is effected on about 30% to 70% and preferably on about 50% of the connecting surface of the fibre material layer (1) and the cover layer (2).

3. A multi-layer lightweight panel according to claim 1 or claim 2 characterised in that the application of adhesive (3) is effected in the form of strips which preferably extend continuously over a dimension of the panel.

4. A multi-layer lightweight panel according to one of claims 1 to 3 characterised in that the partial adhesive join is effected at least at two mutually parallel edges, preferably the longitudinal edges of the connecting surface between the fibre material layer (1) and the cover layer (2).

5. A multi-layer lightweight panel according to one of claims 1 to 4 characterised by the use of water glass or dispersion adhesive as the adhesive.

6. A multi-layer lightweight panel according to one of claims 1 to 5 characterised in that the fibre material layer (1) has on one side by way of a partial adhesive join (3) a cover layer (2) of bonded wood fibre and on the other side, preferably by way of a continuous adhesive layer (4), a strong closed possibly load-bearing cover layer (2').

7. A multi-layer lightweight panel comprising a fibre material layer (1) of air-permeable structure and a cover layer (2) at one or both sides and comprising air-permeable bonded wood fibre characterised by an at least partially air-permeable bond between cover layer (2) or at least one of the cover layers (2) and the fibre material layer (1), wherein said bond on the one hand is effected by a partial adhesive join by the preferably mineral bonding agent of the cover layer (2) and on the other hand by a frame which embraces the panel layers.

## Revendications

1. Panneau léger multicouche formé d'une couche de matière fibreuse (1) à structure perméable à l'air et d'une couche de recouvrement (2) en laine de bois liée perméable à l'air qui est prévue sur un ou deux côtés, caractérisé par une liaison au moins partiellement perméable à l'air entre la couche de recouvrement (2) ou l'une au moins des couches de recouvrement (2) et la couche de matière fibreuse (1), cette liaison étant obtenue par collage partiel et le collage partiel étant obtenu d'une part grâce au liant, de préférence minéral, de la couche de recouvrement (2), d'autre part grâce à une application de colle (3) sur des zones partielles de la zone de liaison de la couche de recouvrement (2) et/ou de la couche de matière fibreuse (1).

2. Panneau léger multicouche selon la revendication 1, caractérisé en ce que l'application de colle (3) a lieu sur environ 30 % à 70 %, de préférence sur environ 50 % de la surface de liaison entre la couche de matière fibreuse (1) et la couche de recouvrement (2).

3. Panneau léger multicouche selon la revendication 1 ou 2, caractérisé en ce que l'application de colle (3) se fait sous la forme de bandes qui s'étendent de préférence d'un bout à l'autre d'une dimension du panneau.

4. Panneau léger multicouche selon l'une des revendications 1 à 3, caractérisé en ce que le collage partiel a lieu au moins sur deux bords parallèles, de préférence sur les bords longitudinaux, de la surface de liaison entre la couche de matière fibreuse (1) et la couche de recouvrement (2).

5. Panneau léger multicouche selon l'une des revendications 1 à 4, caractérisé en ce qu'on utilise comme colle du verre soluble ou de la colle à dispersion.

6. Panneau léger multicouche selon l'une des revendications 1 à 5, caractérisé en ce que la couche de matière fibreuse (1) comporte sur un côté, grâce à un collage partiel (3), une couche de recouvrement (2) en laine de bois liée, et sur l'autre côté, de préférence grâce à une couche de colle continue (4), une couche de recouvrement (2') solide, fermée et éventuellement porteuse.

7. Panneau léger multicouche formé d'une couche de matière fibreuse (1) à structure perméable à l'air et d'une couche de recouvrement (2) en laine de bois liée perméable à l'air qui est prévue sur un ou deux côtés, caractérisé par une liaison au moins partiellement perméable à l'air entre la couche de recouvrement (2) ou l'une au moins des couches de recouvrement (2) et la couche de matière fibreuse (1), cette liaison étant obtenue d'une part grâce à un collage partiel à l'aide du liant, de préférence minéral, de la couche de recouvrement (2), et d'autre part grâce à un cadre couvrant les couches du panneau.
